**Europäisches Patentamt**

**European Patent Office**

**Office européen des brevets**

(19)

(11) Veröffentlichungsnummer: **0 008 430**
B1

(12) **EUROPÄISCHE PATENTSCHRIFT**

(45) Veröffentlichungstag der Patentschrift: **03.11.82**

(21) Anmeldenummer: **79102938.2**

(22) Anmeldetag: **13.08.79**

(51) Int. Cl.³: **C 25 B 11/06,**
**G 01 N 27/56, H 01 M 8/12**

(54) **Mischoxyde für die Elektroden elektrochemischer Hochtemperaturzellen mit Festelektrolyten und Verfahren zu ihrer Herstellung.**

(30) Priorität: **25.08.78 DE 2837118**

(43) Veröffentlichungstag der Anmeldung:
**05.03.80 Patentblatt 80/5**

(45) Bekanntmachung des Hinweises auf die Patenterteilung:
**03.11.82 Patentblatt 82/44**

(84) Benannte Vertragsstaaten:
**CH FR GB IT**

(56) Entgegenhaltungen:
**DE - A - 2 614 727**
**GB - A - 2 002 739**
**NL - A - 7 204 743**
**US - A - 3 610 888**

**JOURNAL OF ELECTROCHEMICAL SOCIETY vol. 124, Nr. 3, 1977, Seiten 321—325 T. KUDO et al.: "Rare Earth Cobaltites as Oxygen Electrode Materials for Alkaline Solution"**

(73) Patentinhaber: **DORNIER SYSTEM GmbH**
**Postfach 1360**
**D-7990 Friedrichshafen (DE)**

(72) Erfinder: **Schmidberger, Rainer, Dr.**
**Im Bild 6**
**D-7775 Bermatingen (DE)**
Erfinder: **Dönitz, Wolfgang, Dr.**
**Kapellenweg 50**
**D-7759 Immenstaad (DE)**

(74) Vertreter: **Landsmann, Ralf, Dipl.-Ing.**
**Kleeweg 3**
**D-7990 Friedrichshafen 1 (DE)**

EP 0 008 430 B1

Mischoxide für die Elektroden elektrochemischer Hochtemperaturzellen mit Festelektrolyten und Verfahren zu ihrer Herstellung

Die Erfindung betrifft ein Material auf der Basis von $LaMnO_3$, $LaNiO_3$ oder $LaCoO_3$ zur Herstellung von porösen Elektroden für elektrochemische Hochtemperaturzellen und Meßsonden mit sauerstoffionenleitenden Feststoffelektrolyten.

In Journal of Electrochemical Society (Vol. 124 Nr. 3 1977 Seiten 321 bis 325) ist eine Sauerstoffelektrode der o. a. Zusammensetzung für elektrochemische Systeme in alkalischer Lösung bei tiefen Temperaturen (wässriger Elektrolyte) beschrieben, während der Gegenstand der Erfindung Systeme mit Festelektrolyten, gasförmigen Reaktionsprodukten, hohen Temperaturen und weiten Sauerstoffpartialdruckbereichen betrifft. Das auf Seite 323 Abs. 3 Zeilen 1—3 erwähnte Material zersetzt sich in reduzierender Atmosphäre bei hohen Temperaturen. Auf Seite 324 der Literaturstelle 1 wird der Ersatz von Co durch andere Übergangsmetalle angegeben, was nicht Gegenstand der vorliegenden Erfindung ist. In der o.a. Literaturstelle ist die Wirkung einzelner Substitutionen auf die Eigenschaften der Materialien allgemein und nicht im Hinblick auf die Eigenschaften, die Gegenstand der Aufgabenstellung sind, angegeben.

DE—A—2614727 beschreibt ein Material $La_x Me^I_y Me^{II}O_3$, wobei $Me^I$ Strontium ist $Me^{II}$ ist entweder Chrom oder Mangan oder Nickel, während beim Erfindungsgegenstand andere Metalle vorhanden sind, wie weiter unten ausgeführt wird.

NL—A—7204743 betrifft eine Elektrode für wässrige elektrochemische Prozesse. Auch hier ist der Kausalzusammenhang zwischen der Substitution und den Eigenschaften der erfindungsgemässen Materialien nicht angegeben. Die im Beispiel genannten Zusammensetzungen sind bei hohen Temperaturen in $H_2$ nicht stabil.

US—A—3610888 betrifft ein Material zur Herstellung elektrischer Heizellement. Die Wirkungsweise der einzelnen Substitutionen (z.B. Ersatz von Mn oder Cr) wird nicht angegeben. Aus diesem Stand der Technik ist nicht zu entnehmen, welche der angegebenen Zusammensetzungen der hier vorliegenden Aufgabenstellung genügen würde. Insbesondere ist nichts über die Beständigkeit in reduzierender Atmosphäre ausgesagt.

Elektrochemische Hochtemperaturzellen mit sauerstoffionenleitenden Festelektrolyten arbeiten im allgemeinen bei erhöhter Betriebstemperatur (500—1000°C). Als Elektroden für derartige Hochtemperaturzellen werden häufig poröse Feststoffelektroden verwendet, die einen Gasdurchtritt zur Grenzfläche Elektrode Elektrolyt ermöglichen. Die Anforderungen, die an die Elektroden zu stellen sind, hängen sehr stark von den Betriebsparametern der elektrochemischen Hochtemperaturzelle ab, wobei insbesondere Betriebstemperatur und Zusammensetzung der Gasatmosphäre die dominierenden Parameter sind.

Bei einigen Anwendungsfällen ist die Atmosphärenzusammensetzung, der die jeweiligen Elektroden ausgesetzt sind, durch die Betriebsbedingungen der Zellen relativ eng begrenzt. Dies gilt z.B. für Hochtemperatur-Brennstoffzellen oder Hochtemperatur-Elektrolysezellen, wobei Betriebstemperatur von 1000°C der Sauerstoffpartialdruck auf der Luftelektrodenseite maximal zwischen $10^{-2}$ und 10—50 bar variiert und auf der Brenngasseite oder Wasserdampfseite im Bereich zwischen $10^{-12}$ und $10^{-18}$ bar liegt.

Bei anderen Anwendungsfällen, wie z.B. Meßsonden oder elektrochemischen Sauerstoffpumpen kann der Sauerstoffpartial druck über sehr weite Bereiche variieren (z.B. zwischen 1 und $10^{-18}$ bar bei 1000°C).

Für die erstgenannten Anwendungsfälle mit eng begrenzten Sauerstoffparialdruckbereichen sind aus der Literatur und aus Patentschriften Elektrodenmaterialien bekannt, die die an sie zu stellenden Anforderungen weitgehend erfüllen.

Edelmetallelektroden werden für diese Anwendungsfälle praktisch nicht mehr eingesetzt, da preisgünstigere Materialien die Elektrodenfunktionen übernehmen können. Auf der Brenngas- oder Wasserdampfseite können Nicht-Edelmetallelektroden z.B. aus Nickel, Kobalt, Eisen, Kupfer und dgl. verwendet werden, wobei teilweise der Einbau der porösen Elektroden in ein keramisches Stützskellett erfolgt. Eine derartige Nickel-Zirkondioxid-Cermet-Elektrode wird beispielsweise in der US—A 3503809 beschrieben.

Bei einer Betriebstemperatur von 1000°C ist der Einsatz einer derartigen Nickelelektrode auf Sauerstoffpartialdrucke unterhalb von $10^{-10}$ bar beschränkt.

Für den Betrieb in oxidierender Gasatmosphäre sind aus der Literatur ebenfalls Elektrodenmaterialien bekannt, die aus Metalloxiden oder Mischoxiden bestehen und eine elektronische Leitfähigkeit aufweisen, die um ca. 2—3 Zehnerpotenzen unter der metallischen Leitfähigkeit liegt. Sehr hohe Leitfähigkeit weisen dabei Mischoxide mit Perowskitstruktur auf, die z.B. in der US—A 3400054 angegeben sind. In reduzierender Atmosphäre nimmt die Leitfähigkeit dieser Materialien sehr stark ab und unter Umständen erfolgt sogar ein Zerfall der Perowskitstrukturen.

Falls die Betriebstemperatur von elektrochemischen Hochtemperaturzellen nur in engen Grenzen variiert wird, stellen somit die dem Stand der Technik entsprechenden Mischoxidelektroden auf der oxidierenden Seite und Nicht-Edelmetallelektroden auf der reduzierenden Gasseite einen technisch und ökonomisch vorteilhafte Lösung dar.

Für Anwendungsfälle, bei denen die Elektroden stark variierenden Sauerstoffpartialdrucken ausgesetzt sind, sind aus dem Stand der Technik nur Edelmatallelektroden (insbesondere poröse Platinelektroden) bekannt.

Beispielsweise wird von Dueker, Friese und Haecker in SAE (Techn. Paper) 1975, 750223 als Abgaselektrode einer Meßsonde zur Abgasüberwachung in Kraftfahrzeugen Platin verwendet.

In der DE—A—2632138 werden für Luft- und Abgaselektrode einer Sauerstoffmeßsonde Edelmetalle wie Pt, Au oder Ag vorgeschlagen.

Diese Edelmetallelektroden können in oxidierender wie auch in reduzierender Atmosphäre bis zu sehr hohen Temperaturen eingesetzt werden. Sie wiesen auch teilweise eine häufig erwünschte katalytische Aktivat zur Einstellung des thermodynamischen Gleichgewichts im Gasraum auf (CO-Oxidation bzw. $NO_x$-Reduktion).

Wegen der hohen Kosten von Edelmetallen sind jedoch aus wirtschaftlichen Gründen Edelmetallelektroden und insbesondere Platinelektroden nach Möglichkeit zu vermeiden.

Ausser diesem wirtschaftlichen Nachteil von Platinelektroden gibt es auch noch technische Nachteile, wie z.B. die Bildung flüchtiger Platinoxide bei hoher Temperatur, die im Langzeitbetrieb zur völligen Degradation führen kann, sowie die Niegung des Platins durch seine hohe Oberflächenspannung bei erhöhten Temperaturen Agglomerate zu bilden, wodurch die elektrochemische Wirksamkeit derartiger Elektroden verschlechtert wird.

Der Erfindung liegt die Aufgabe zugrunde, ein preisgünstiges siehe J. S. unten Material auf der Basis von $LaMnO_3$, $LaNiO_3$ oder $LaCoO_3$ zur Herstellung von porösen Elektroden für elektrochemische Hochtemperaturzellen und Meßsonden mit sauerstoffionenleitenden Feststoffelektrolyten zu schaffen, das über einen weiten Sauerstoffpartialdruckbereich thermodynamisch beständig ist und eine ausreichend hohe elektronische Leitfähigkeit besitzt.

Diese Aufgabe wird erfindungsgemäss dadurch gelöst, dass geringe Mengen Chrom und einwertige oder zweiwertige Kationen aus der Gruppe der Alkalielemente oder Erdalkalielemente oder von tn, Cd, Mg, Sn oder Pb Bestandteil der Mischoxide sind.

Beim Gegenstand der Erfindung werden in elektronisch hochleitfähigen Mischoxiden einzelne Elemente durch andere Elemente substituiert, wodurch sich die thermodynamische Stabilität des Mischoxids in reduzierender Atmosphäre bei hoher Temperatur erhöht, ohne dass gleichzeitig eine wesentliche Abnahme der elektronischen Leitfähigkeit erfolgt. Darüberhinaus wird durch geeignete Dotierung der thermische Ausdehnungskoeffizient des Elektrodenmaterials an den von Zirkondioxid-Elektrolytkeramik angepasst.

Weitere Vorteile, Merkmale und Anwendungsmöglichkeiten der Erfindung ergeben sich aus den Figuren, die nachfolgend beschrieben sind.

Es zeigen:

Fig. 1 ein Schaubild der elektronischen Lietfähigkeit eines erfindungsgemässen Materials in Abhängigkeit vom Sauerstoffpartialdruck,

Fig. 2 ein Schaubild der Stromspannungscharakteristik einer Hochtemperaturzelle.

Ein erfindungsgemässes Material hat die Zusammensetzung $La_{0,8}$ $Pb_{0,2}$ $Cr_{0,3}$ $Mn_{0,7}$ $O_3$.

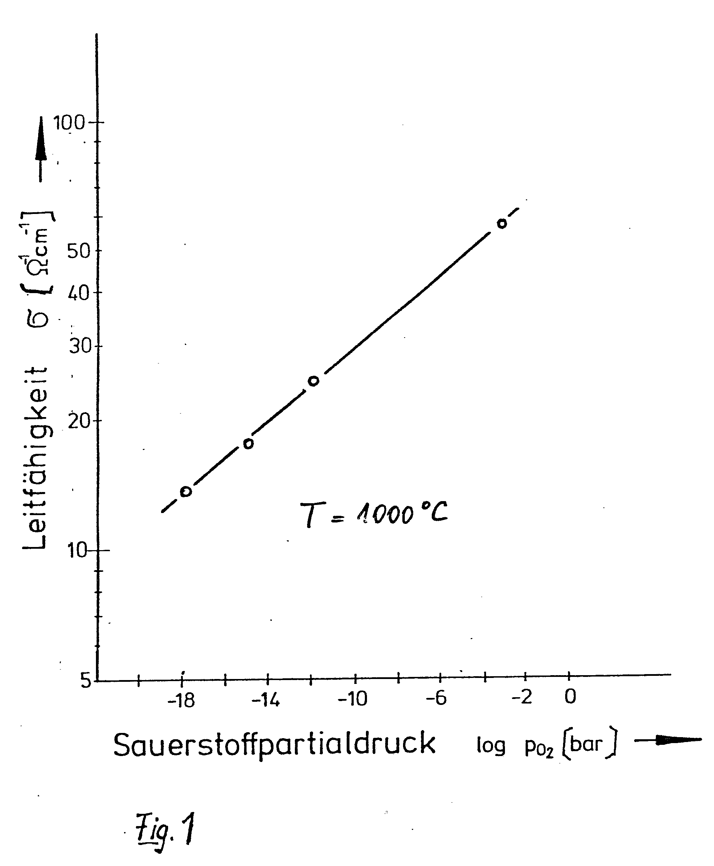

Fig. 1 zeigt die elektronische Leitfähigkeit des erfindungsgemässen Materials bei 1000°C in Abhängigkeit vom Sauerstoffpartialdruck. Die Leitfähigkeit ändert sich um den Faktor 5 bei unterschiedlichem Sauerstoffpartialdruck von $1—10^{-18}$ bar.

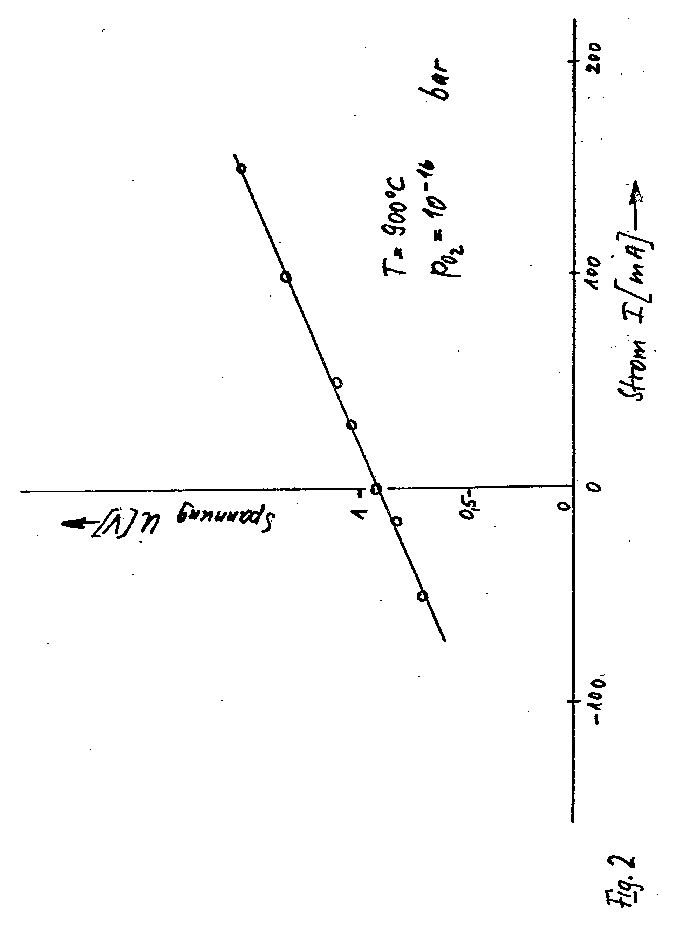

Fig. 2 zeigt die Stromspannungscharakteristik einer elektrochemischen Hochtemperaturzelle mit Feststoffelektrolyt aus stabilisiertem Zirkondioxid, einer erfindungsgemässen Elektrode und einer Gegenelektrode aus einem nur in oxidierende Atmosphäre stabilen Mischoxid. Der Ersatz eines Teils der Manganionen durch Chromionen im erfindungsgemässen Material bewirkt eine Erhöhung der thermodynamischen Stabilität des Mischoxids in reduzierender Atmosphäre, d.h. die Sauerstoffabgabe des Mischoxids erfolgt bei niedrigeren Sauerstoffpartialdrucken, als ohne Chromzugabe. Der teilweise Ersatz des Lanthans durch Bleiionen bewirkt die Anpassung des thermischen Ausdehnungskoeffizienten an den von stabilisiertem Zirkondioxid.

Das erfindungsgemässe Material weist nicht den bei reinem Lanthan-Chrom-Oxid bekannten Phasenwechsel orthorhombischrhomboedrisch bei 250°C auf, der mit einer Änderung der Gitterkonstanten verbunden ist und zu Ablösungen der Elektrode oder Rissbildungen in der Elektrode Anlass geben würde.

Die katalytische Aktivät des Materials ermöglicht die Einstellung des thermodynamischen gleichgewichts im Abgas von Verbrennungseinrichtungen, wobei durch den Bleianteil die Empfindlichkeit des Elektrodenmaterials gegenüber Vergiftung durch Bleizusätze im Brennstoff verringert wird.

Um gleichzeitig eine hohe elektronische Leitfähigkeit und hohe Reduktionsstabilität des Mischoxids zu erzielen, muss der Chromzusatz möglichst gering gehalten und dabei durch eine möglichst homogene Elementverteilung im atomaren Bereich wirksam gemacht werden.

Dies geschieht erfindungsgemäss durch die Herstellung des Materials in einem Reaktionssprühverfahren gemäß den Ansprüchen 2—8, bei dem die Oxide oder andere lösliche Verbindungen der beteiligten Elemente in stöchiometrischer Zusammensetzung zunächst gelöst und dann unter Einwirkung hoher Temperaturen im Sprühreaktor versprüht werden und unter Abtrennung des Lösungsmittels z.B. mittels eines Zyklons das Material als Pulver gewonnen wird.

Auf diese Weise werden nicht nur die gewünschten Materialeigenschaften erreicht, das Verfahren vermeidet gleichzeitig eine Vielzahl der für eine Pulverherstellung sonst üblichen Prozeßschritte, wie mehrmaliges Mischen, Pressen, Kalzinieren und Aufmahlen des Oxidpulvers und lässt sich daher auch wirtschaftlich günstig realisieren. Dies ist in der Gegenüberstellung der Verfahrensmerkmale der nachfolgenden Tabelle dargestellt.

Als Hilfsstoffe (Patentansprüche 3—5) finden z.B. folgende Materialen Verwendung:

—$Li_2O$, organische Stoffe wie Polyvinylalkohol zur Erhöhung der Porosität

—$SiO_2$, $Bi_2O_3$ zur Verbesserung der Elektrodenhaftung.

TABELLE

HERSTELLUNG VON MISCHOXIDEN

|  | KONVENTIONELLES VERFAHREN | REAKTIONSSPRÜHTROCKNUNG |
| --- | --- | --- |
| AUSGANGSPRODUKTE | OXIDE, CARBONATE | OXIDE, CARBONATE, NITRATE, CHLORIDE |
| HERSTELLUNGSVERFAHREN | − MISCHEN DER EINZEPULVER<br>− PRESSEN DER PULVER<br>− BRENNEN DER PRESSLINGE<br> (TYP. 1200 − 1400°/24 − 48 h)<br>− MAHLEN<br>− PRESSEN<br>− BRENNEN | − HERSTELLUNG EINER GEMEINSAMEN<br> LÖSUNG<br>− EINSPRUHEN (SPRÜHCALCINIEREN) |
| NACHTEILE | − INHOMOGENE VERTEILUNG BEI<br> MEHRKOMPONENTIGEN SYSTEMEN<br>− FLÜCHTIGKEIT BESTIMMTER OXIDE<br>− SINTERAKTIVITÄT NUR DURCH<br> LANGES MAHLEN ERZIELBAR<br>− KOSTENINTENSIV BEI MEHRKOMPO-<br> NENTIGEN OXIDEN WEGEN 2 ODER<br> 3-BRANDVERFAHREN<br>− VERUNREINIGUNGEN DURCH<br> MAHLABRIEB | − TEILWEISE TEURERE AUSGANGSPRODUKTE<br> WEGEN UNLÖSLICHKEIT MANCHER OXIDE<br> $(Al_2O_3, ZrO_2 \ldots)$ |

TABELLE (Fortsetzung)

HERSTELLUNG VON MISCHOXIDEN

| | KONVENTIONELLES VERFAHREN | REAKTIONSSPRÜHTROCKNUNG |
|---|---|---|
| AUSGANGSPRODUKTE | OXIDE, CARBONATE | OXIDE, CARBONATE, NITRATE, CHLORIDE |
| VORTEILE | LEICHT VERFÜGBARE, BILLIGE ROHSTOFFE | − BIS IN DEN ATOMAREN BEREICH HOMOGENE ZUSAMMENSETZUNGEN UND DARAUS RESULTIEREND HERVORRAGENDE MATERIALEIGENSCHAFTEN <br> − HOHE SINTERAKTIVITÄT <br> − HOHE REINHEIT DER ENDPRODUKTE. |

0008430

## Patentansprüche

1. Material auf der Basis von LaMnO$_3$, LaNiO$_3$ oder LaCoO$_3$ zur Herstellung von porösen Elektroden für elektrochemische Hochtemperaturzellen und Meßsonden mit sauerstoffionenleitenden Feststoffelektrolyten, dadurch gekennzeichnet, dass geringe Mengen Chrom und einwertige oder zweiwertige Kationen aus der Gruppe der Alkalielemente oder Erdalkalielemente oder von Zn, Cd, Mg, Sn oder Pb Bestandteil der Mischoxide sind.

2. Verfahren zur Herstellung das Materials nach Anspruch 1, dadurch gekennzeichnet, dass eine Lösung der Kationen im exakten stöchiometrischen Verhältnis unter Einwirkung hoher Temperaturen von ca. 1000 bis 1500 K zusammen mit dem für die Reaktion notwendigen Sauerstoff in ein heisses Reaktionsgefäss eingesprüht wird bzw. der Sauerstoff eingeblasen wird, dass das Lösungsmittel unter Zurücklassung der nichtflüchtigen Bestandteile verdampft und dass bei weiterem Durchlauf der Bestandteile durch die heisse Reaktionszone sich Mischoxide der gewünschten Zusammensetzung mit homogener Elementverteilung, insbesondere Chromverteilung, im atomaren Bereich bilden, die als Pulver in einem Zyklon abgeschieden werden, wobei die Lösungsmitteldämpfe entfernt werden.

3. Verfahren nach Anspruch 2, dadurch gekennzeichnet, dass Hilfsstoffe zur Verbesserung der Elektrodenhaftung oder zur Erhöhung der Porosität der Elektrode zugesetzt werden.

4. Verfahren nach Anspruch 3, dadurch gekennzeichnet, dass die Hilfsstoffe der Lösung in Form einer Suspension zugesetzt werden.

5. Verfahren nach Anspruch 3, dadurch gekennzeichnet, dass die Hilfsstoffe der Lösung in Form löslicher Verbindungen zugesetzt werden.

6. Verfahren nach Ansprüchen 2—5, dadurch gekennzeichnet, dass Platin oder Platinlegierungen zur Verbesserung der katalytischen Aktivät zur Einstellung des thermodynamischen Gleichgewichts in Abgasen zugesetzt werden.

7. Verfahren nach Anspruch 6, dadurch gekennzeichnet, dass Platin oder Platinlegierungen der Lösung in Form einer Suspension zugesetzt werden.

8. Verfahren nach Anspruch 6, dadurch gekennzeichnet, dass Platin der Lösung in Form einer löslichen Verbindung zugesetzt wird.

## Revendications

1. Matière à base de LaMnO$_3$, LaNiO$_3$ ou LaCoO$_3$ pour la fabrication d'électrodes poreuses pour cellules électrochimiques pour haute température et sondes de mesure utilisant des électrolytes solides conducteurs des ions oxygène, caractérisée en ce que de petites quantités de chrome et des cations monovalents ou bivalents du groupe des éléments alcalins ou des éléments alcalino-terreux ou encore choisis parmi Zn, Cd, Mg, Sn et Pb entrent dans la composition des oxydes mixtes.

2. Procédé pour fabriquer la matière selon la revendication 1, caractérisé en ce qu'on pulvérise dans un réacteur chaud une solution des cations dans un rapport exactement stoechiométrique sous l'action de températures élevées allant d'environ 1000 à 1500 K, avec l'oxygène nécessaire pour la réaction, ou en ce qu'on insuffle l'oxygène, en ce que le solvent s'évapore en laissant le résidu de composants non volatils et en ce que, lors de la continuation du passage desdits composants dans la zone de réaction chaude, il se forme des oxydes mixtes ayant la composition désirée avec une distribution homogène des éléments, en particulier, avec und distribution homogène du chrome à l'état atomique, oxydes que l'on sépare sous la forme de poudre dans un cyclone, en élimenant en même temps les vapeurs de solvant.

3. Procédé selon la revendication 2, caractérisé en ce qu'on ajoute des additifs pour améliorer l'adhérence des électrodes ou pour augmenter la porosité de celles-ci.

4. Procédé selon la revendication 3, caractérisé en ce qu'on ajoute les additifs à la solution sous la forme d'une suspension.

5. Procédé selon la revendication 3, caractérisé en ce qu'on ajoute les additifs à la solution sous la forme de composés solubles.

6. Procédé selon les revendications 2 à 5, caractérisé en ce qu'on ajoute du platine ou des alliages de platine pour améliorer l'activité catalytique afin de régler l'équilibre thermodynamique dans les gaz d'échappement.

7. Procédé selon la revendication 6, caractérisé en ce qu'on ajoute le platine ou les alliages de platine à la solution sous la forme d'une suspension.

8. Procédé selon la revendication 6, caractérisé en ce qu'on ajoute le platine à la solution sous la forme d'un composé soluble.

## Claims

1. Material based on LaMnO$_3$, LaNiO$_3$ or LaCoO$_3$ for the manufacture of porous electrodes for electrochemical high temperature cells and measuring sondes having oxigen ion-conducting solid electrolytes, comprising small amounts of chromium and monovalent or bivalent cations selected from the group of the alkali elements or the alkaline earth elements or of zinc, cadmium, magnesium, tin or lead.

2. A process for the manufacture of the material of claim 1, which comprises spraying into a hot reaction zone a solution of cations in the exact stoichiometric ratio and at a high temperature of about 1000 K to 1500 K, in the presence of sufficient oxygen for reaction, or blowing in the oxygen, evaporating the solvent from the non-volatile constituents, whereby during further passage of the constituents through the hot reaction zone, mixed oxides powder particles are formed having the desired composition with homogenous element distribution, particularly chromium distribution, in the atomic range the powder being separated from the solvent vapors by a cyclone.

3. A process according to claim 2 including adding adjuvant substances for improving the electrode adhesion or for increasing the porosity of the electrode.

4. A process according to claim 3 including adding the adjuvant substances to the solution in the form of a suspension.

5. A process according to claim 3 including adding the adjuvant substances to the solution in the form of soluble compounds.

6. A process according to claims 2—5 including adding platinum or alloys thereof for improving the catalytic activity of the material for an adjustment of the thermodynamic equilibrium in exhaust gases.

7. A process according to claim 6 including adding platinum or alloys thereof to said solution in the form of a suspension.

8. A process according to claim 6 including adding platinum to said solution in the form of a soluble compound.

Fig. 1

Fig. 2